# EUROPÄISCHE PATENTSCHRIFT

(11) **EP 2 435 804 B1**
(45) Veröffentlichungstag und Bekanntmachung des Hinweises auf die Patenterteilung: **12.06.2019**
(21) Anmeldenummer: 10714644.1
(22) Anmeldetag: 23.04.2010
(51) Int. Cl.: G01F 23/284, H01P 1/08, H01P 5/08

(54) **ANORDNUNG ZUR FÜLLSTANDSMESSUNG MIT EINEM MIT MIKROWELLEN ARBEITENDEN FÜLLSTANDSMESSGERÄT**
ASSEMBLY FOR MEASURING A FILL LEVEL BY MEANS OF A FILL LEVEL MEASURING DEVICE OPERATING WITH MICROWAVES
SYSTÈME DE MESURE DE NIVEAU COMPORTANT UN APPAREIL DE MESURE DE NIVEAU FONCTIONNANT PAR MICRO-ONDES

(30) Priorität: 25.05.2009 DE 102009026433
(43) Veröffentlichungstag der Anmeldung: 04.04.2012
(73) Patentinhaber: Endress+Hauser SE+Co. KG, 79689 Maulburg (DE)
(72) Erfinder: REIMELT, Ralf, 79110 Freiburg (DE)
(74) Vertreter: Andres, Angelika Maria
(86) Internationale Anmeldenummer: PCT/EP2010/055442
(87) Internationale Veröffentlichungsnummer: WO 2010/136276

(56) Entgegenhaltungen:
- DE-A1- 2 017 042
- DE-A1- 2 165 011
- DE-A1- 2 211 438
- DE-A1-102006 062 223
- DE-C1- 19 615 854
- US-A- 4 688 009
- US-A1- 2006 158 371

## Beschreibung

Die Erfindung betrifft eine Anordnung zur Messung eines Füllstandes eines Füllgutes in einem Behälter mit einem nach dem Laufzeitprinzip arbeitenden Füllstandsmessgerät, das im Messbetrieb mittels einer Antenne Mikrowellen sendet und deren an der Füllgutoberfläche reflektierten Reflexionssignale nach einer vom zu messenden Füllstand abhängigen Laufzeit wieder empfängt und anhand von deren Laufzeit den Füllstand bestimmt.

Derartige berührungslos arbeitende Messanordnungen werden in einer Vielzahl von Industriezweigen eingesetzt, z.B. in der verarbeitenden Industrie, in der Chemie oder in der Lebensmittelindustrie. Dabei wird das Füllstandsmessgerät oberhalb des Füllguts auf dem Behälter montiert und dessen Antenne auf das Füllgut ausgerichtet.

Zur Bestimmung der Laufzeiten können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse gesendet, die von der Füllgutoberfläche reflektiert und nach einer abstandsabhängigen Laufzeit wieder empfangen werden. Es wird anhand des empfangenen Signals eine Echofunktion abgeleitet, die die empfangene Signalamplitude als Funktion der Zeit wiedergibt. Jeder Wert dieser Echofunktion entspricht der Amplitude eines in einem bestimmten Abstand von der Antenne reflektierten Echos.

Beim FMCW-Verfahren wird kontinuierlich ein Mikrowellensignal gesendet, das periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Mikrowellensignals und dessen Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Aus der Echofunktion wird mindestens ein Nutzecho bestimmt, das der Reflexion des Sendesignals an der Füllgutoberfläche entspricht. Aus der Laufzeit des Nutzechos ergibt sich bei einer bekannten Ausbreitungsgeschwindigkeit der Mikrowellen unmittelbar die Wegstrecke, die die Mikrowellen auf ihrem Weg vom Messgerät zur Füllgutoberfläche und zurück durchlaufen. Anhand der Einbauhöhe des Füllstandsmessgeräts über dem Behälter lässt sich hieraus unmittelbar der gesuchte Füllstand berechnen.

In der US 2006/0158371 A1 ist ein nach dem Laufzeitprinzip arbeitendes Füllstandsmessgerät beschrieben, das eine Einkopplung für Mikrowellensignale umfasst, mittels der ein Koaxialwellenleiter an einen Rundhohlleiter angeschlossen ist, über den eine die Mikrowellensignale sendende Antenne des Füllstandsmessgeräts gespeist wird. Die Einkopplung umfasst einen endseitig verschlossenen Wellenleiter, in den ein Innenleiter des Koaxialwellenleiters in senkrecht zur Senderichtung verlaufender Richtung eingeführt ist, und einen Impedanzwandler. In Bezug auf den endseitig verschlossenen Wellenleiter ist beschrieben, dass dieser in einer Rechteckhohlleiter-Konfiguration im TE10 Mode und in einer abgerundeten Rechteckhohlleiter-Konfiguration in einem quasi TE 10 Mode operiert. Der Impedanzwandler dient dazu, die der Impedanz des Koaxialwellenleiters entsprechende Impedanz des endseitig verschlossenen Wellenleiters an die Impedanz des ausgangsseitig unmittelbar an den Impedanzwandler angeschlossenen, die Antenne speisenden Rundhohlleiters anzupassen.

Es gibt eine Vielzahl von Anwendungen, bei denen es erforderlich oder zumindest wünschenswert ist, die Mikrowellensignale durch eine gasdichte Durchführung hindurch in den Behälter zu senden und deren Reflexionssignale durch die Durchführung hindurch zu empfangen. Dies ist z.B. immer dann der Fall, wenn eine gasdichte Trennung zum Prozess erforderlich ist, durch die der Behälter gasdicht verschlossen ist. Des Weiteren ist eine solche gasdiffusionsdichte Durchführung z.B. dann erforderlich, wenn eine Kapselung der Messgerätelektronik, z.B. aus Explosionsschutzgründen, vorgeschrieben ist. Diese Forderung ist insb. für Füllstandsmessgeräte besonders relevant, die zur Füllstandsmessung hochfrequente Mikrowellensignale, insb. Mikrowellensignale mit Frequenzen von 70 GHz und mehr, verwenden, da in diesen Messgeräten in der Messgerätelektronik sehr hohe Leistungen umgesetzt werden.

In der DE 10 2006 062 223 A1 ist eine Anordnung zur Messung eines Füllstandes eines Füllguts in einem Behälter beschrieben, mit
- einem mit Mikrowellen arbeitenden Füllstandsmessgerät, mit
   -- einer Messgerätelektronik, die einen Mikrowellengenerator zur Erzeugung von Mikrowellensignalen umfasst,
   -- einer an die Messgerätelektronik angeschlossenen Antenne, die dazu dient die Mikrowellensignale in den Behälter in Richtung des Füllguts zu senden,
   -- wobei das Füllstandsmessgerät derart ausgebildet ist, dass die zum Senden der Mikrowellensignale dienende Antenne dazu dient, im Behälter in Richtung dieser Antenne zurück reflektierte Reflexionssignale der Mikrowellensignale zu empfangen, und
- einer in einen Signalpfad der Mikrowellensignale eingesetzten Durchführung, mit
   -- einem Hohlleiter, und
   -- einem in den Hohlleiter gasdicht eingesetzten für Mikrowellen transparenten Fenster.

Gasdichte Durchführungen können z.B. in Form von Hohlleiterdurchführungen realisiert werden. Dabei wird ein Fenster aus einem für Mikrowellen durchlässigen Isolator in einen Hohleiter eingesetzt. Gängige Verfahren hierzu sind das Einlöten von Keramikfenstern oder das Einglasen von Glasfenstern. Einglasungen liegen meist als Druckglas-Durchführungen oder als so genannte angepasste Durchführungen vor. Dabei wird der in der Regel metallische Hohlleiter auf ein Glasfenster mit ähnlichen thermischem Ausdehnungskoeffizienten aufgeschrumpft. Hierdurch ist die Dichtheit der Durchführung gewährleistet.

In der DE OS 21 65 011 ist ein Mikrowellenfenster für Hohlleiter beschrieben, das einen mit Dielektrikum gefüllten Hohlleiterabschnitt umfasst, der derart bemessen ist, dass er die gleiche untere Grenzfrequenzwellenlänge aufweist, wie hierzu benachbarten Hohlleiterabschnitte.

In der US 4,688,009 A ist eine Durchführung mit einem in einen Hohlleiter eingesetzten Fenster beschrieben, deren Fenster eine Scheibe mit einer Dicke von einem ganzzahligen Vielfachen einer halben Wellenlänge aufweist, auf deren gegenüberliegenden Außenseiten jeweils eine Anpassschicht mit einer Dicke von einem ungeraden ganzzahligen Vielfachen einer viertel Wellenlänge angeordnet ist.

In der DE 41 00 922 A1 ist eine Hohlleiterdurchführung beschrieben, die in Anwendungen eingesetzt werden kann, in denen die Durchführung hohen Druck- und/oder Temperaturschwankungen ausgesetzt ist.
Die Durchführung umfasst einen Hohleiter in dem zwei spiegelbildlich zueinander angeordnete Fenster aus einem für elektromagnetische Wellen durchlässigen Werkstoff angeordnet sind, durch die der Hohlleiter in zwei getrennte Segmente unterteilt ist. Jedes der Fenster weist einen zylindrischen und einen daran angrenzenden konischen Abschnitt auf. Die konischen Abschnitte sind jeweils in einer entsprechend konisch ausgebildeten Buchse im Hohlleiter gelagert, um eine hohe Beständigkeit der Durchführung gegenüber Druck- und/oder Temperaturschwankungen zu erzielen. Wie aus den Figuren dieser Anmeldung ersichtlich entsteht hierdurch ein sehr dickes massives Fenster. An den freien Enden der zylinderförmigen Abschnitte sind jeweils λ/4 Transformatoren angeordnet.

Die Fenster derartiger Durchführungen führen jedoch in der Regel zu einer starken Verschlechterung der Qualität der Messsignale. In diesem Zusammenhang hat es sich gezeigt, dass diese nachteiligen Effekte der Durchführung umso schwerwiegender sind, je größer die Dicke des Fensters im Vergleich zu der Wellenlänge ist, die die Mikrowellensignale im Fenster aufweisen. Hauptursache für diese nachteiligen Auswirkungen sind Reflexionen und Mehrfachreflexionen, die an den Übergängen zum und vom Fenster und im Fenster auftreten. Hierdurch entstehen Störsignale, die sich dem eigentlichen Messsignal überlagern und damit zu einer Verschlechterung der Qualität der Messsignale führen.

Es ist eine Aufgabe der Erfindung eine Anordnung zur Messung eines Füllstandes eines Füllguts in einem Behälter mit einem mit Mikrowellen arbeitenden Füllstandsmessgerät anzugeben, die mit einer Hohlleiterdurchführung ausgestattet ist, die, insb. bei hohen Signalfrequenzen von 70 GHz und mehr, für eine möglichst große Bandbreite an Signalfrequenzen eine möglichst geringe Beeinträchtigung der Messsignalqualität bewirkt.

Hierzu besteht die Erfindung in einer Anordnung zur Messung eines Füllstandes eines Füllguts in einem Behälter gemäß Anspruch 1. Gemäß einer Ausgestaltung der Erfindung ist das Füllstandsmessgerät ein Pulsradar-Gerät, die Mikrowellensignale sind Mikrowellenpulse einer vorgegebenen Sendefrequenz und die vorgegebene Signalfrequenz ist gleich dieser Sendefrequenz.

Gemäß einer anderen Ausgestaltung der Erfindung ist das Füllstandsmessgerät ein FMCW-Radar-Gerät, die Mikrowellensignale sind periodisch frequenzmodulierte Signale, und die vorgegebene Signalfrequenz ist gleich einer Mittenfrequenz der frequenzmodulierten Signale.

Gemäß einer bevorzugten Ausgestaltung weisen die Anpassschichten jeweils eine Dielektrizitätskonstante auf, die einer Wurzel aus einem Produkt einer Dielektrizitätskonstanten des Hohlleiters und einer Dielektrizitätskonstanten der Scheibe entspricht.

Gemäß einer Weiterbildung der Erfindung
- ist das Fenster ein einteiliges Bauelement, das
   aus einem einzigen Werkstoff besteht, und
- die Anpassschichten sind auf den beiden Außenseiten der Scheibe
   vorgesehene mit Ausnehmungen versehene Schichten aus diesem Werkstoff.

Gemäß einer Ausgestaltung der Weiterbildung sind die Ausnehmungen gerade in den Anpassschichten verlaufende Rillen oder kreisförmige in den Anpassschichten verlaufende Rillen.

Gemäß einer Ausgestaltung der Weiterbildung weisen die Ausnehmungen eine Tiefe auf, die gleich der Dicke der Anpassschichten ist, und die in etwa dem Viertel der Wellenlänge des ersten im Hohlleiter ausbreitungsfähigen Modes der Mikrowellensignale bei der vorgegebenen Signalfrequenz in den Anpassschichten entspricht.

Gemäß einer weiteren Ausgestaltung der Weiterbildung weisen die Anpassschichten jeweils eine von den Abmessungen der Ausnehmungen abhängige effektive Dielektrizitätskonstante auf, die der Wurzel aus dem Produkt der Dielektrizitätskonstanten des Hohlleiters und der Dielektrizitätskonstanten der Scheibe entspricht.

Gemäß einer weiteren Ausgestaltung der Weiterbildung ist ein Verhältnis von einem von allen Ausnehmungen einer Anpassschicht eingenommenen Gesamtvolumen zum Gesamtvolumen der Anpassschicht derart vorgegeben, dass die Anpassschicht eine effektive Dielektrizitätskonstante aufweist, die der Wurzel aus dem Produkt der Dielektrizitätskonstanten des Hohlleiters und der Dielektrizitätskonstanten der Scheibe entspricht.

Zusätzlich umfasst die Erfindung eine Weiterbildung der Anordnung, bei der
- der Durchmesser des kreisförmigen Querschnitts geringfügig größer als die längere Seite des rechteckigen Querschnitts ist, so dass der rechteckige Querschnitt vollständig in den kreisförmigen Querschnitt hinein passt
- das Übergangselement mehrere aneinander angrenzenden Zonen aufweist,
   -- von denen eine erste äußere Zone eine axiale durchgehende Bohrung aufweist, deren Querschnitt gleich dem kreisförmigen Querschnitt der Antenne ist,
   -- von denen eine zweite äußere Zone eine axiale durchgehende Bohrung aufweist, deren Querschnitt gleich dem rechteckigen Querschnitt der Durchführung ist, und
   -- von denen mindestens zwei zwischen der ersten und der zweiten äußeren Zone angeordnete Übergangszonen sind,
      --- die jeweils eine die Übergangszone in axialer Richtung durchdringende Ausnehmung aufweisen,
      ---- die sich aus einer Bohrung mit dem rechteckigen Querschnitt und einer koaxial dazu ausgeführten Zusatzbohrung mit einem kreisförmigen Querschnitt zusammensetzt, wobei
- die Durchmesser der Zusatzbohrungen geringer als der Durchmesser des kreisförmigen Querschnitts der ersten äußeren Zone und größer als die kürzere Seite des rechteckigen Querschnitts der zweiten äußeren Zone sind, und ausgehend von der der ersten Zone benachbarten Übergangszone von Übergangszone zu Übergangszone abnehmen.

Die Erfindung und deren Vorteile werden nun anhand der Figuren der Zeichnung, in denen drei Ausführungsbeispiele dargestellt sind, näher erläutert; gleiche Teile sind in den Figuren mit gleichen Bezugszeichen versehen.
- Fig. 1 zeigt:: eine Anordnung zur Füllstandsmessung;
- Fig. 2 zeigt:: eine über einen mit einer Durchführung versehenen Hohlleiter gespeiste dielektrische Stabantenne;
- Fig. 3 zeigt:: eine Durchführung;
- Fig. 4a zeigt:: eine Durchführung mit Anpassschichten, die durch mit geraden Rillen versehene zusätzliche Fensterschichten gebildet sind;
- Fig. 4b zeigt:: eine Draufsicht auf das Fenster von Fig. 4a;
- Fig. 5a zeigt:: eine Durchführung mit Anpassschichten, die durch mit kreisförmigen Rillen versehene zusätzliche Fensterschichten gebildet sind;
- Fig. 5b zeigt:: eine Draufsicht auf das Fenster von Fig. 4b;
- Fig. 6 zeigt:: eine erfindungsgemäße Anordnung mit einer Durchführung mit rechteckigem Querschnitt, einer Antenne mit rundem Querschnitt, und einem zwischen Durchführung und Antenne eingesetzten Übergangselement; und
- Fig. 7 zeigt:: eine Ansicht einer Hälfte des Übergangselements von Fig. 6.

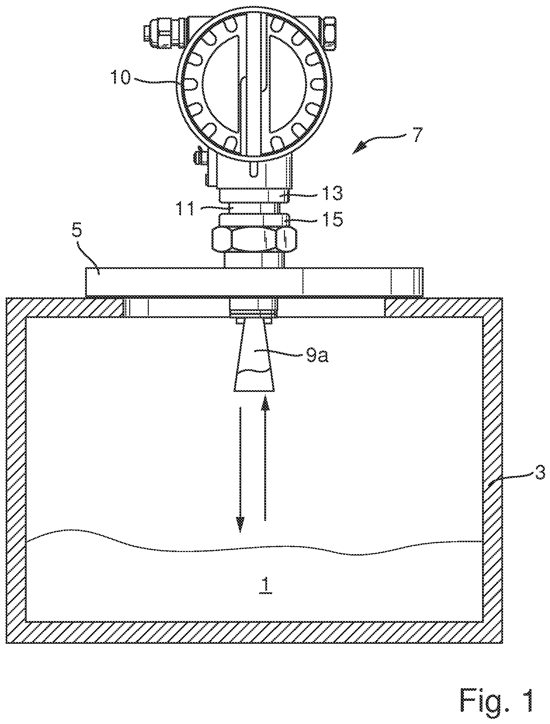

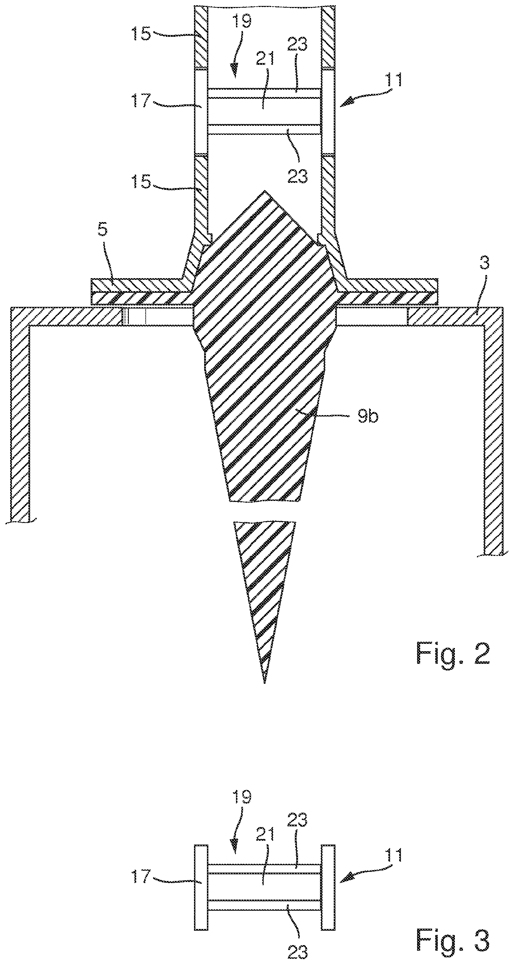

Fig. 1 zeigt eine erfindungsgemäße Anordnung zur Messung eines Füllstandes eines Füllguts 1 in einem Behälter 3. Die Anordnung umfasst ein auf dem Behälter 3 z.B. mittels eines Flansches 5 befestigtes mit Mikrowellen nach dem Laufzeitprinzip arbeitendes Füllstandsmessgerät 7. Hierzu eignen sich beispielsweise die eingangs erwähnten Puls- oder FMCW Radar Füllstandsmessgeräte. Das Füllstandsmessgerät 7 weist eine Messgerätelektronik auf, die einen Mikrowellengenerator zur Erzeugung von Mikrowellensignalen umfasst, und eine an die Messgerätelektronik angeschlossene Antenne 9. In dem dargestellten Ausführungsbeispiel ist die Antenne 9 eine in den Behälter 3 eingeführte Hornantenne 9a. Die Erfindung ist jedoch wie nachfolgend weiter ausgeführt nicht auf Hornantennen 9a beschränkt. Fig. 2 zeigt ein alternatives Ausführungsbeispiel, bei dem die Antenne 9 eine dielektrische Stabantenne 9b ist. Die Messgerätelektronik ist in einem außerhalb des Behälters 3 befindlichen Gehäuse 10 angeordnet. Messgerätelektroniken und deren Mikrowellengeneratoren sind aus dem Stand der Technik bekannt, und daher hier nicht im Detail dargestellt und erläutert.

Die Antenne 9 dient dazu die Mikrowellensignale in den Behälter 3 in Richtung des Füllguts 1 zu senden und deren im Behälter 3 in Richtung der Antenne 9 zurück reflektierten Reflexionssignale zu empfangen. Dies ist in Fig. 1 durch Pfeile symbolisch dargestellt. Die Reflexionssignale werden der Messgerätelektronik zugeführt, die anhand dieser Signale eine für den Weg vom Füllstandsmessgerät 7 zur Füllgutoberfläche und zurück benötigte vom Füllstand abhängige Signallaufzeit ermittelt und anhand dieser Signallaufzeit den Füllstand bestimmt. Alternativ hierzu können auch zwei separate Antennen verwendet werden, von denen eine dazu dient die Mikrowellensignale in den Behälter 3 in Richtung des Füllguts 1 zu senden, und eine zweite dazu dient die an der Füllgutoberfläche reflektierten Reflexionssignale der gesendeten Mikrowellensignale zu empfangen und der Messgerätelektronik zuzuführen.

Erfindungsgemäß umfasst die Anordnung mindestens eine in den Signalpfad der Mikrowellensignale oder der Reflexionssignale eingesetzte gasdichte für Mikrowellen transparente Durchführung 11.

Die Durchführung 11 kann je nach Anwendung an unterschiedlichen Orten in den Signalpfad eingesetzt werden. In dem in Fig. 1 dargestellten Ausführungsbeispiel ist sie unmittelbar in einen Hohlleiterausgang 13 der Messgerätelektronik eingesetzt, über den die Antenne 9 gespeist wird und über den die von der Antenne 9 empfangenen Reflexionssignale der Messgerätelektronik zugeführt werden. Dieser Hohlleiterausgang 13 ist an einen weiteren Hohlleiter 15 angeschlossen, der wiederum an die Antenne 9a angeschlossen ist. In dem dargestellten Ausführungsbeispiel ist die Durchführung 11 zu besseren Veranschaulichung unmittelbar am Ausgang des Gehäuses 10 positioniert. Sie kann natürlich auch innerhalb des Gehäuses 10 angeordnet werden. Die Durchführung 11 bewirkt hier eine Kapselung der Messgerätelektronik, wie sie beispielsweise bei Anwendungen in explosionsgefährdeten Bereichen erforderlich ist. Diese Anordnung ist z.B. in Verbindung mit Füllstandsmessgeräten 7 besonders vorteilhaft, die mit hochfrequenten Mikrowellensignalen, insb. mit Mikrowellensignalen mit Frequenzen von 70 GHz und mehr, arbeiten, da bei diesen Füllstandsmessgeräten 7 in der Messgerätelektronik sehr hohe Leistungen umgesetzt werden, die mit Explosionsschutz-Richtlinien nicht vereinbar sind.

Alternativ kann die Durchführung 11 aber auch gezielt eingesetzt werden, um eine gasdichte Trennung zum Prozess hin zu bewirken. In dem Fall ist die Durchführung 11 vorzugsweise in unmittelbarer Nähe des Behälters 3 angeordnet. Dies geschieht beispielsweise, wie in Fig. 2 dargestellt, indem die Durchführung 11 in unmittelbarer Nähe der Antenne 9b in den Hohlleiter 15 eingesetzt ist, über den die Antenne 9b von der Messgerätelektronik mit Mikrowellensignalen gespeist wird, und über den die von der Antenne 9b empfangenen Reflexionssignale der Messgerätelektronik zugeführt werden. Bei der oben genannten Verwendung von zwei getrennten Antennen zum Senden bzw. zum Empfangen werden hierzu vorzugsweise zwei Durchführungen eingesetzt, die jeweils in unmittelbarer Nähe einer der Antennen angeordnet werden.

Die Durchführung 11 umfasst einen Hohlleiter 17 und ein in den Hohlleiter 17 gasdicht eingesetztes für Mikrowellen transparentes Fenster 19. Fig. 3 zeigt ein erstes Ausführungsbeispiel hierzu im Detail. Es umfasst eine ebene Scheibe 21, die beispielsweise aus Keramik, aus einem Glas, z.B. einem Borsilikatglas, oder einem anderen für Mikrowellen transparenten Werkstoff besteht. Die Scheibe 21 ist gasdicht in den Hohlleiter 17 eingesetzt. Dies geschieht beispielsweise durch das Einlöten einer keramischen Scheibe bzw. durch das Einglasen einer Glasscheibe.

Erfindungsgemäß weist die Scheibe 21 eine Dicke auf, die in etwa einer halben Wellenlänge λ/2 oder einem geringen ganzzahligen Vielfachen x der halben Wellenlänge λ/2 eines ersten im Hohlleiter 17 ausbreitungsfähigen Modes, insb. eines Grundmodes der Mikrowellensignale bei einer vorgegebenen Signalfrequenz in der Scheibe 21 entspricht. Hierdurch wird ein äußerst reflexionsarmer Übergang bewirkt, da sich auf die Scheibe 21 einfallende an der Scheibenoberseite reflektierte Signalanteile idealer Weise mit darauf einfallenden an der Scheibenunterseite reflektierten Signalanteilen destruktiv überlagern, und damit keine negativen Einwirkungen auf die Qualität des Messsignals mehr haben.

Die Wellenlänge λ ergibt sich aus der Dielektrizitätskonstante des Werkstoffs der Scheibe 21, dem ersten im Hohlleiter 17 ausbreitungsfähigen Mode und der Signalfrequenz und kann beispielsweise anhand von Simulationsrechnungen bestimmt werden. Die obige Bedingung für destruktive Interferenz ist streng genommen nur für die vorgegebene Signalfrequenz exakt erfüllt. Sie ist jedoch näherungsweise auch für eng zu dieser Frequenz benachbarte Frequenzen erfüllt, so dass sich durch die obige Bemessungsvorschrift eine gewisse Bandbreite ergibt, über die ein reflexionsarmer Übergang besteht.

Typischer Weise weisen die Mikrowellensignale nicht nur eine einzige Frequenz f, sondern ein Frequenzspektrum auf. So weist beispielsweise ein bei einer Sendefrequenz von 77 GHz betriebenes Pulsradargerät eine Frequenzbandbreite von 72 GHz - 82 GHz auf. Für die Dimensionierung der Dicke der Scheibe 21 wird daher vorzugsweise die Sendefrequenz von 77 GHz als vorgegebene Signalfrequenz verwendet. Analog wird für FMCW Radargeräte eine Mittenfrequenz des gesendeten Frequenzspektrums als vorgegebene Signalfrequenz für die Dimensionierung verwendet. Die gewünschten Bedingungen für destruktive Interferenz sind damit für die Sende- bzw. Mittenfrequenz optimal erfüllt, während sie umso schlechter erfüllt sind, je weiter die Frequenzen von dieser Sende- bzw. Mittenfrequenz abweichen.

Um für eine möglichst große Bandbreite an Frequenzen einen möglichst reflexionsarmen Übergang zu erzielen, entspricht die Dicke der Scheibe 21 vorzugsweise in etwa der halben Wellenlänge λ/2. Sie kann aber auch ein geringes Vielfaches, z.B. das zwei- oder dreifache der halben Wellenlänge λ/2 betragen. Dies ist z.B. dann sinnvoll, wenn eine höhere mechanische Stabilität und Beständigkeit der Durchführung 11 erforderlich ist. Dabei sollte jedoch jeweils das geringste mögliche Vielfache der halben Wellenlänge λ/2 verwendet werden. Der Grund hierfür besteht darin, dass die Bandbreite der Frequenzen, für die der Übergang reflexionsarm ist mit steigender Dicke der Scheibe 21, d.h. mit steigendem verwendeten Vielfachen x der halben Wellenlänge λ/2 abnimmt.

Dies bedeutet, dass die optimale Dicke der Scheibe 21 mit steigender Frequenz abnimmt. Je dünner die Scheibe 21 wird, umso relevanter werden fertigungsbedingte Toleranzen der Dicke der Scheibe 21 und Toleranzen für die Dielektrizitätskonstante des Materials der Scheibe 21, was sich insb. bei hohen Frequenzen nachteilig auf die Bandbreite auswirkt.

Zur Vergrößerung der Bandbreite, für die der durch die Durchführung 11 gegebene Übergang möglichst reflexionsarm ist, ist deshalb auf den beiden gegenüberliegenden Außenseiten der Scheibe 21 jeweils eine Anpassschicht 23 vorgesehen, deren Dicke jeweils in etwa einem Viertel der Wellenlänge λ/4 des ersten im Hohlleiter 17 ausbreitungsfähigen Modes der Mikrowellensignale bei der vorgegebenen Signalfrequenz in der Anpassschicht 23 entspricht.

Die Wellenlänge λ ergibt sich auch hier aus der Dielektrizitätskonstante der Anpassschicht 23, dem ersten ausbreitungsfähigen Mode und der vorgegebenen Signalfrequenz und kann ebenfalls anhand von Simulationsrechnungen bestimmt werden. Für die Dimensionierung der Dicke der Anpassschicht 23 wird auch hier vorzugsweise die Sendefrequenz bzw. die Mittenfrequenz des gesendeten Frequenzspektrums als vorgegebene Signalfrequenz verwendet.

Die Anpassschichten 23 weisen vorzugsweise jeweils eine Dielektrizitätskonstante auf, die einer Wurzel aus einem Produkt einer Dielektrizitätskonstanten des Hohlleiters 13 bzw. 15 und der Dielektrizitätskonstanten der Scheibe 21 entspricht.

Grundsätzlich ist es möglich die Anpassschichten 23, wie in Fig. 3 dargestellt, als separate Schichten auszubilden, die auf die beiden Außenseiten der Scheibe 21 entsprechend befestigt, z.B. aufgeklebt werden.
Es ist jedoch nicht immer möglich, hierfür einen Werkstoff zu finden, der genau die gewünschte Dielektrizitätskonstante aufweist. Außerdem sind je nach Position der Durchführung 11 auch bestimmte Anforderungen an die chemische Beständigkeit des Werkstoffs und die mechanische Beständigkeit der Befestigung der Anpassschichten 23 auf der Scheibe 21 zu erfüllen, die die Anzahl der verwendbaren Werkstoffe noch weiter einschränken können.

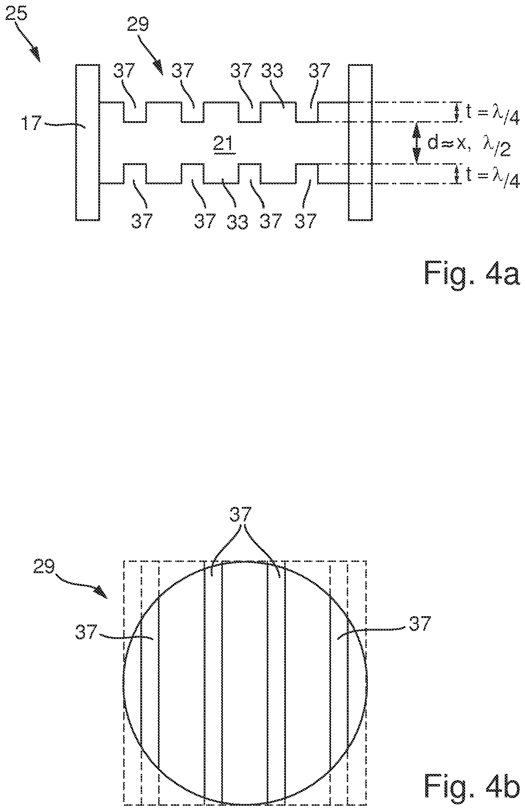

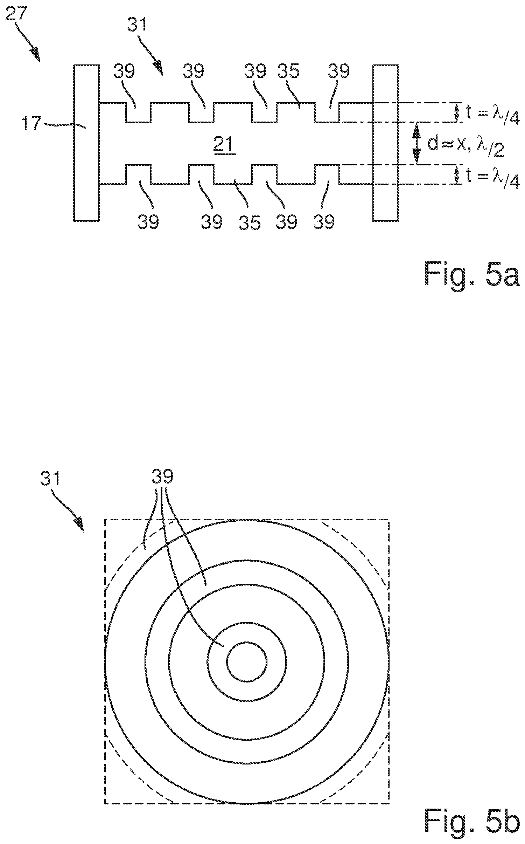

Diese gegebenenfalls auftretenden Probleme können durch die in den Figuren 4a und 4b und 5a und 5b dargestellten Weiterbildungen der Erfindung überwunden werden.

Die in diesen Figuren dargestellten Durchführungen 25, 27 weisen ebenfalls jeweils ein in den Hohlleiter 17 eingesetztes Fenster 29, 31 auf, dass aus der Scheibe 21 und zwei Anpassschichten 33, 35 besteht. Die Figuren 4a und 5a zeigen jeweils eine Schnittzeichnung der Durchführung 25 bzw. 27 und die Figuren 4b und 5b jeweils eine Draufsicht auf das Fenster 29 bzw. 31 der jeweiligen Durchführung 25, 27.

Im Unterschied zu der in Fig. 2 dargestellten Variante der Durchführung 11 sind die Fenster 29, 31 hier jedoch aus einem einzigen Werkstoff bestehende einteilige Bauelemente. D.h. die Scheibe 21 und die beiden Anpassschichten 33, 35 sind durch ein einziges Bauelement gebildet, das aus einem einzigen Werkstoff besteht. Das Bauteil besteht z.B. aus Keramik oder aus Glas, insb. aus Borsilikatglas, und ist gasdicht in den Hohleiter 17 eingesetzt, z.B. eingelötet oder eingeglast.

Die Scheibe 21 weist auch hier eine Dicke d auf, die in etwa der halben Wellenlänge λ/2 oder einem geringen ganzzahligen Vielfachen x der halben Wellenlänge λ/2 des ersten im Hohlleiter ausbreitungsfähigen Modes der Mikrowellensignale bei der vorgegebenen Signalfrequenz in der Scheibe 21 entspricht. Die Anpassschichten 33, 35 sind auf den beiden Außenseiten der Scheibe 21 vorgesehene mit Ausnehmungen 37, 39 versehene Schichten des jeweiligen Fensters 29, 31. Dies bietet den Vorteil, dass die Anpassschichten 33, 35 integraler Bestandteil des Fensters 29, 31 sind, dass sie nicht in einem separaten Arbeitsgang aufgebracht werden müssen, und dass sie sich auch bei starker chemischer oder mechanischer Belastung, oder bei auf das Fenster 29, 31 einwirkenden Temperatur- und/oder Druckschwankungen nicht von der Scheibe 21 ablösen.

In dem in den Figuren 4a und 4b dargestellten Ausführungsbeispiel sind die Ausnehmungen 37 gerade in den Anpassschichten 33 verlaufende Rillen.
In dem in den Figuren 5a und 5b dargestellten Ausführungsbeispiel sind die Ausnehmungen 39 kreisförmige in den Anpassschichten 35 verlaufende Rillen. Alternativ können natürlich auch Ausnehmungen mit anderer Formgebung verwendet werden.

Die Ausnehmungen 37, 39 bewirkten, dass die Anpassschichten 33, 35 eine von den Abmessungen der Ausnehmungen 37, 39 abhängige effektive Dielektrizitätskonstante aufweisen, die geringer als die der Scheibe 21 ist.
Diese effektive Dielektrizitätskonstante ist somit anhand der Dimensionierung der Ausnehmungen 37, 39 innerhalb weiter Grenzen wählbar. Um eine möglichst optimale und breitbandige Anpassung zu erzielen werden die Abmessungen der Ausnehmungen 37, 39 vorzugsweise derart gewählt, dass die Anpassschichten 33, 35 jeweils eine von diesen Abmessungen abhängige effektive Dielektrizitätskonstante aufweisen, die der Wurzel aus dem Produkt der Dielektrizitätskonstanten des Hohlleiters 17 und der Dielektrizitätskonstanten der Scheibe 21 entspricht. Die genaue Dimensionierung kann beispielsweise anhand von Computersimulationen ermittelt werden.

Die optimale Dimensionierung kann beispielsweise anhand einer Variation des Verhältnisses von einem von allen Ausnehmungen einer Anpassschicht eingenommenen Gesamtvolumen zum Gesamtvolumen der jeweiligen Anpassschicht 33, 35 ermittelt werden. Das Verhältnis wird dann dem entsprechend derart vorgegeben, dass die Anpassschicht 33, 35 eine effektive Dielektrizitätskonstante aufweist, die der Wurzel aus dem Produkt der Dielektrizitätskonstanten des Hohlleiters 17 und der
Dielektrizitätskonstanten der Scheibe 21 entspricht.

Die Ausnehmungen 37, 39 weisen vorzugsweise eine Tiefe t auf, die gleich der Dicke der Anpassschichten 33, 35 ist, und bei der vorgegebenen Signalfrequenz einem Viertel der Wellenlänge λ/4 des ersten im Hohleiter 17 ausbreitungsfähigen Modes der Mikrowellensignale in den Anpassschichten 29, 31 entspricht.

Die Durchführungen 11, 25, 27 können je nach Anwendung sowohl als Rundhohlleiter-Durchführung als auch als Rechteckhohlleiter-Durchführung ausgebildet sein. Bei einer Rundhohlleiter-Durchführung weisen der Hohlleiter 17 und das darin eingesetzte Fenster 19, 29, 31 jeweils einen kreisförmigen Querschnitt auf. Bei einer Rechteckhohlleiter-Durchführung weisen der Hohlleiter 17 und das darin eingesetzte Fenster 19, 29, 31 entsprechend einen rechteckigen Querschnitt auf. Zur Veranschaulichung ist in den Figuren 4b und 5b jeweils durch die durchgezogene Linienführung eine Rundhohlleiter-Durchführung dargestellt und jeweils durch die gestrichelt fortgesetzte Linienführung die entsprechende Rechteck-Hohlleiter-Durchführung angezeigt. Der erste in einem Rundhohlleiter ausbreitungsfähige Mode ist der TE11 Mode. Der erste

im Rechteckhohlleiter ausbreitungsfähige Mode ist der TE10 Mode. Die Rundhohlleiter-Durchführungen werden in Verbindung mit Antennen bzw. Antennespeisungen mit kreisförmigem Querschnitt verwendet; die Rechteckhohlleiter-Durchführungen werden in Verbindung mit Antennen bzw. Antennespeisungen mit kreisförmigem Querschnitt verwendet.

In der Füllstandsmesstechnik werden heute in der Regel aus fertigungs-technischen Gründen überwiegend Antennen mit kreisförmigem Querschnitt, wie z.B. die dargestellte Hornantenne 9a und der dargestellte dielektrische Stabstrahler 9b, verwendet.

Es gibt aber auch Anwendungen, bei denen es gewünscht ist, Antennen mit rundem Querschnitt weitestgehend über Rechteckhohlleiter zu speisen.
Der Grund hierfür liegt darin, dass Antennen mit rundem Querschnitt fertigungstechnische Vorteile bieten und dass die Speisung über Rechteckhohlleiter in diesen Anwendungen Vorteile bietet.

Ein Beispiel hierfür sind Anwendungen in denen nur ein einziger Mikrowellenmode, typsicher Weise der erste ausbreitungsfähige Mode, gesendet und empfangen werden soll. Der Frequenzbereich, in dem ausschließlich der erste ausbreitungsfähige Mode, nicht aber der nächst höhere Mode, ausbreitungsfähig ist, ist in Rechteckhohlleitern deutlich größer als in Rundhohlleitern. Ursache hierfür ist, dass der Abstand zwischen der Cut-Off Frequenz des ersten ausbreitungsfähigen Modes und der Cut-Off Frequenz des nächst höheren Modes im Rechteckhohlleiter größer ist als im Rundhohlleiter.

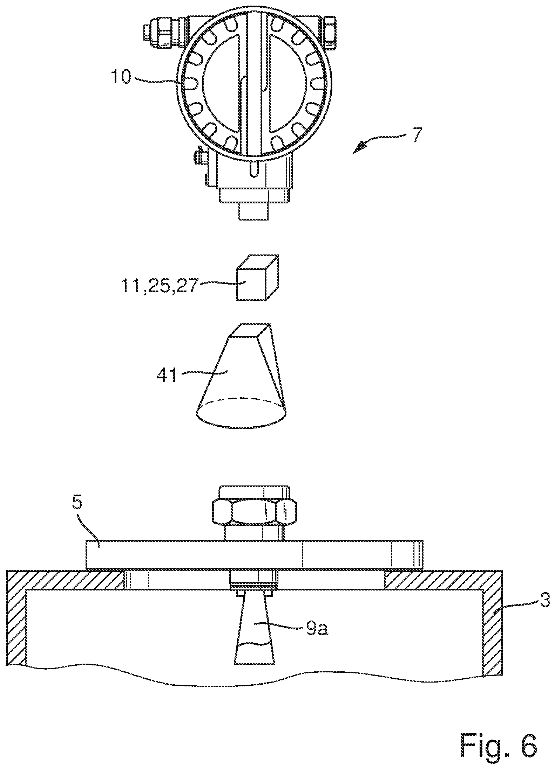

Erfindungsgemäß wird daher, wie in Fig. 6 dargestellt, die Durchführung 11, 25 oder 27 mit einem Fenster 19, 29, 31 mit rechteckigem Querschnitt in Kombination mit einer Antenne mit kreisförmigem Querschnitt, z.B. der Hornantenne 9a, eingesetzt. Um dies zu ermöglichen, ist zwischen der Durchführung 11, 25 bzw. 27 und der Antenne 9a ein Übergangselement 41 eingesetzt. Das Übergangselement 41 ist ein Hohlleiter, der durchführungsseitig einen rechteckigen Querschnitt und antennenseitig einen runden Querschnitt aufweist. Das Übergangselement 41 ist derart geformt, dass in seinem Inneren der durchführungsseitige rechteckige Querschnitt möglichst kontinuierlich entlang des Übergangselements 41 in den antennenseitigen kreisförmigen Querschnitt übergeführt wird.

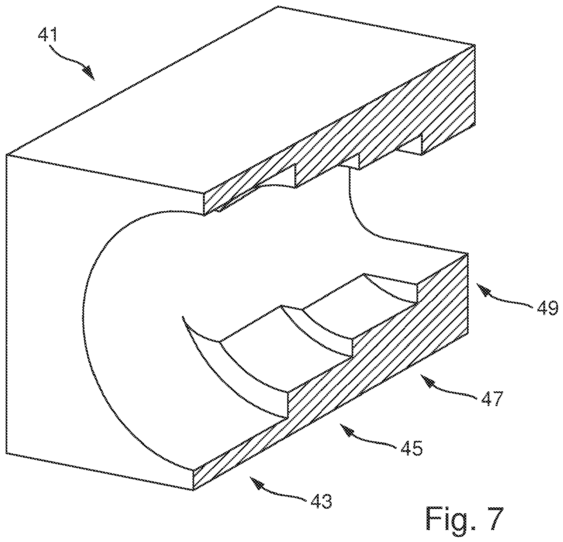

Fig. 7 zeigt eine Ansicht einer Hälfte eines insb. aus fertigungstechnischen Gründen vorteilhaften Ausführungsform eines solchen Übergangselements 41. Das Übergangselement 41 wurde aus einem vollen Quader gefertigt und besteht aus mehreren aneinander angrenzenden Zonen. Eine erste in der Zeichnung dem Betrachter zugewandte äußere Zone 43 weist eine axiale durchgehende Bohrung auf, deren Querschnitt gleich dem kreisförmigen Querschnitt der Antenne 9a ist. Eine zweite in der Zeichnung vom Betrachter abgewandte äußere Zone 49 weist eine axiale durchgehende Bohrung auf, deren Querschnitt gleich dem rechteckigen Querschnitt der Durchführung ist. Vorzugsweise wird ein rechteckiger Querschnitt mit abgerundeten Ecken verwendet. Der Durchmesser des kreisförmigen Querschnitts ist geringfügig größer als die längere Seite des rechteckigen Querschnitts, so dass der rechteckig Querschnitt vollständig in den kreisförmigen Querschnitt hinein passt.

Zwischen der ersten und der zweiten äußeren Zone 43, 49 sind mindestens zwei Übergangszonen 45, 47 angeordnet, die jeweils eine die Übergangszone 45, 47 in axialer Richtung durchdringende Ausnehmung aufweisen. Die Ausnehmungen setzen sich jeweils aus einer Bohrung mit dem rechteckigen Querschnitt und einer koaxial dazu ausgeführten Zusatzbohrung mit einem kreisförmigen Querschnitt zusammen. Dabei sind die Durchmesser der Zusatzbohrungen alle geringer als der Durchmesser des kreisförmigen Querschnitts der ersten äußeren Zone 43 und größer als die kürzere Seite des rechteckigen Querschnitts der zweiten äußeren Zone 49. Ausgehend von der zu der ersten Zone 43 benachbarten Übergangszone 45 nimmt der Durchmesser der Zusatzbohrungen von Übergangszone 45 zu Übergangszone 47 ab.

Hergestellt wird das Übergangselement 41, indem durch den vollen Quader zunächst eine den Quader in axialer Richtung vollständig durchdringende Bohrung mit dem rechteckigen Querschnitt hindurch gebohrt wird. Anschließend wird die erste Zone 43 gefertigt, indem die in diesem Abschnitt des Quaders bereits bestehende Bohrung mit rechteckigem Querschnitt auf den kreisförmigen Querschnitt der Antenne 9a aufgebohrt wird. Danach werden die Übergangszonen 45, 47 gefertigt, in dem durch die Zone 43 mit dem kreisscheibenförmigen Querschnitt sukzessive Bohrer mit immer geringer werdendem Durchmesser in die jeweiligen Übergangszonen 45, 47 eingeführt werden, mit denen die Querschnittsflächen in den einzelnen Übergangszonen 45, 47 vergrößert werden.
- 1: Füllgut
- 3: Behälter
- 5: Flansch
- 7: Füllstandsmessgerät
- 9: Antenne
9a Hornantenne
9b dielektrische Stabantenne
- 10: Gehäuse
- 11: Durchführung
- 13: Hohlleiterausgang
- 15: Hohlleiter
- 17: Hohlleiter der Durchführung
- 19: Fenster
- 21: Scheibe
- 23: Anpassschicht
- 25: Durchführung
- 27: Durchführung
- 29: Fenster
- 31: Fenster
- 33: Anpassschicht
- 35: Anpassschicht
- 37: Ausnehmungen
- 39: Ausnehmungen
- 41: Übergangselement
- 43: erste äußere Zone
- 45: Übergangszone
- 47: Übergangszone
- 49: zweite äußere Zone

## Patentansprüche

1. Anordnung zur Messung eines Füllstandes eines Füllguts (1) in einem Behälter (3) mit
- einem mit Mikrowellen arbeitenden Füllstandsmessgerät (7), mit
-- einer Messgerätelektronik, die einen Mikrowellengenerator zur Erzeugung von Mikrowellensignalen umfasst,
-- einer an die Messgerätelektronik angeschlossenen Antenne (9, 9a, 9b), die dazu dient die Mikrowellensignale in den Behälter (3) in Richtung des Füllguts (1) zu senden,
-- wobei das Füllstandsmessgerät (7) entweder derart ausgebildet ist, dass die zum Senden der Mikrowellensignale dienende Antenne (9, 9a, 9b) dazu dient, im Behälter (3) in Richtung dieser Antenne (9, 9a, 9b) zurück reflektierte Reflexionssignale der Mikrowellensignale zu empfangen, oder derart ausgebildet ist, dass es eine weitere Antenne umfasst, die dazu dient, an einer Füllgutoberfläche des Füllguts (1) reflektierte Reflexionssignale der Mikrowellensignale zu empfangen,
-- wobei die die Mikrowellensignale sendende Antenne (9, 9a, 9b) über einen Rechteckhohlleiter gespeist ist und einen kreisförmigen Querschnitt aufweist, und
- einer in einen Signalpfad der Mikrowellensignale eingesetzten Durchführung (11, 25, 27), mit
-- einem Hohlleiter (17), und
-- einem in den Hohlleiter (17) gasdicht eingesetzten für Mikrowellen transparenten Fenster (19, 29, 31),
--- das eine Scheibe (21) umfasst, deren Dicke in etwa einer halben Wellenlänge oder einem geringen ganzzahligen Vielfachen der halben Wellenlänge eines ersten im Hohlleiter (17) ausbreitungsfähigen Modes, insb. eines Grundmodes, der Mikrowellensignale bei einer vorgegebenen Signalfrequenz in der Scheibe (21) entspricht, und
--- das zwei auf den gegenüberliegenden Außenseiten der Scheibe (21) befindliche Anpassschichten (23, 33, 35) aufweist, deren Dicke jeweils in etwa einem Viertel der Wellenlänge des ersten im Hohlleiter (17) ausbreitungsfähigen Modes der Mikrowellensignale bei der vorgegebenen Signalfrequenz in den Anpassschichten (23, 33, 35) entspricht,
wobei
- die Durchführung (11, 25, 27) und das Fenster (19, 29, 31) einen rechteckigen Querschnitt aufweisen und in einem die vorgegebene Signalfrequenz umfassenden Frequenzbereich ausschließlich der erste ausbreitungsfähige Mode ausbreitungsfähig ist, und
- zwischen der Durchführung (11, 25, 27) und der Antenne (9, 9a, 9b) ein Übergangselement (41) eingesetzt ist, dass den rechteckigen Querschnitt in den runden Querschnitt überführt.

2. Anordnung nach Anspruch 1, bei der
- das Füllstandsmessgerät (7) ein Pulsradar-Gerät ist,
- die Mikrowellensignale Mikrowellenpulse einer vorgegebenen Sendefrequenz sind, und
- die vorgegebene Signalfrequenz gleich dieser Sendefrequenz ist.

3. Anordnung nach Anspruch 1, bei der
- das Füllstandsmessgerät (7) ein FMCW-Radar-Gerät ist,
- die Mikrowellensignale periodisch frequenzmodulierte Signale sind, und
- die vorgegebene Signalfrequenz gleich einer Mittenfrequenz der frequenzmodulierten Signale ist.

4. Anordnung nach Anspruch 1, bei der
die Anpassschichten (23, 33, 35) jeweils eine Dielektrizitätskonstante aufweisen, die einer Wurzel aus einem Produkt einer Dielektrizitätskonstanten des Hohlleiters (17) und einer Dielektrizitätskonstanten der Scheibe (21) entspricht.

5. Anordnung nach Anspruch 1, bei der
- das Fenster (29, 31) ein einteiliges Bauelement ist, das aus einem einzigen Werkstoff besteht, und
- die Anpassschichten (33, 35) auf den beiden Außenseiten der Scheibe (21) vorgesehene mit Ausnehmungen (37, 39) versehene Schichten aus diesem Werkstoff sind.

6. Anordnung nach Anspruch 5, bei der
die Ausnehmungen (37) gerade in den Anpassschichten (33) verlaufende Rillen sind.

7. Anordnung nach Anspruch 5, bei der
die Ausnehmungen (39) kreisförmige in den Anpassschichten (35) verlaufende Rillen sind.

8. Anordnung nach Anspruch 5, bei der
die Ausnehmungen (37, 39) eine Tiefe (t) aufweisen, die gleich der Dicke der Anpassschichten (33, 35) ist, und die in etwa dem Viertel der Wellenlänge des ersten im Hohlleiter (17) ausbreitungsfähigen Modes der Mikrowellensignale bei der vorgegebenen Signalfrequenz in den Anpassschichten (37, 39) entspricht.

9. Anordnung nach Anspruch 5, bei der
die Anpassschichten (33, 35) jeweils eine von den Abmessungen der Ausnehmungen (33, 35) abhängige effektive Dielektrizitätskonstante aufweisen, die der Wurzel aus dem Produkt der Dielektrizitätskonstanten des Hohlleiters (17) und der Dielektrizitätskonstanten der Scheibe (21) entspricht.

10. Anordnung nach Anspruch 5, bei dem
ein Verhältnis von einem von allen Ausnehmungen (37, 39) einer Anpassschicht (33, 35) eingenommenen Gesamtvolumen zum Gesamtvolumen der Anpassschicht (33, 35) derart vorgegeben ist, dass die Anpassschicht (33, 35) eine effektive Dielektrizitätskonstante aufweist, die der Wurzel aus dem Produkt der Dielektrizitätskonstanten des Hohlleiters (17) und der Dielektrizitätskonstanten der Scheibe (21) entspricht.

11. Anordnung nach einem der vorangehenden Ansprüche, bei der
- der Durchmesser des kreisförmigen Querschnitts geringfügig größer als die längere Seite des rechteckigen Querschnitts ist, so dass der rechteckige Querschnitt vollständig in den kreisförmigen Querschnitt hinein passt
- das Übergangselement (41) mehrere aneinander angrenzende Zonen (43, 45, 47, 49) aufweist,
-- von denen eine erste äußere Zone (43) eine axiale durchgehende Bohrung aufweist, deren Querschnitt gleich dem kreisförmigen Querschnitt der Antenne (9a) ist,
-- von denen eine zweite äußere Zone (49) eine axiale durchgehende Bohrung aufweist, deren Querschnitt gleich dem rechteckigen Querschnitt der Durchführung ist,
-- von denen mindestens zwei zwischen der ersten und der zweiten äußeren Zone (43, 49) angeordnete Übergangszonen (45, 47) sind,
--- die jeweils eine die Übergangszone (45, 47) in axialer Richtung durchdringende Ausnehmung aufweisen,
---- die sich aus einer Bohrung mit dem rechteckigen Querschnitt und einer koaxial dazu ausgeführten Zusatzbohrung mit einem kreisförmigen Querschnitt zusammensetzt, wobei
- die Durchmesser der Zusatzbohrungen geringer als der Durchmesser des kreisförmigen Querschnitts der ersten äußeren Zone (43) und größer als die kürzere Seite des rechteckigen Querschnitts der zweiten äußeren Zone (49) sind, und ausgehend von der der ersten Zone (43) benachbarten Übergangszone (45) von Übergangszone (45) zu Übergangszone (47) abnehmen.

## Claims

1. Arrangement for the measurement of a level of a product (1) in a vessel (3) with
- a level transmitter (7) that works with microwaves, with
-- measuring device electronics which comprise a microwave generator for the generation of microwave signals,
-- an antenna (9, 9a, 9b) connected to the measuring device electronics which serves to emit the microwave signals into the vessel (3) in the direction of the product (1),
-- wherein the level transmitter (7) is either designed in such a way that the antenna (9, 9a, 9b) that serves to emit the microwave signals is used to receive the reflection signals of the microwave signals reflected back in the vessel (3) in the direction of said antenna (9, 9a, 9b), or is designed in such a way that it comprises an additional antenna that is used to receive the reflection signals of the microwave signals reflected at a surface of the product (1),
-- wherein the antenna (9, 9a, 9b) that emits the microwave signals is fed via a rectangular waveguide and has circular cross-section, and
- a feedthrough (11, 25, 27) inserted into the signal path of the microwave signals, with
-- a waveguide (17) and
-- a window (19, 29, 31) which is inserted into the waveguide (17) in a gas-tight manner and is transparent for microwaves,
--- said window having a glass (21) whose thickness corresponds approximately to a half wavelength or a low full multiple of the half wavelength of a first mode that can propagate in the waveguide (17), particularly a basic mode, of the microwave signals at a predefined signal frequency in the glass (21), and
--- which has two adaptation layers (23, 33, 35) located on the opposite outer sides of the glass (21) wherein the thickness of said layers corresponds approximately to a quarter of the wavelength of the first mode of the microwave signals that can propagate in the waveguide (17) at the predefined signal frequency in the adaptation layers (23, 33, 35),
wherein
- the feedthrough (11, 25, 27) and the window (19, 29, 31) have a rectangular cross-section and only the first mode capable of propagation can propagate in a frequency range comprising the predefined signal frequency, and
- a transition element (41) is inserted between the feedthrough (11, 27, 27) and the antenna (9, 9a, 9b), said transition element (41) transforming the rectangular cross-section into the circular cross-section.

2. Arrangement as claimed in Claim 1, wherein
- the level transmitter (7) is a pulse radar device,
- the microwave signals are microwave pulse of a predefined transmission frequency, and
- the predefined signal frequency is equal to this transmission frequency.

3. Arrangement as claimed in Claim 1, wherein
- the level transmitter (7) is an FMCW radar device,
- the microwave signals are periodically frequency-modulated signals, and
- the predefined signal frequency is equal to a center frequency of the frequency-modulated signals.

4. Arrangement as claimed in Claim 1, wherein
the adaptation layers (23, 33, 35) each have a dielectric constant that corresponds to a root of a product of a dielectric constant of the waveguide (17) and a dielectric constant of the glass (21).

5. Arrangement as claimed in Claim 1, wherein
- the window (29, 31) is a single-piece component which is made from a single material, and
- the adaptation layers (33, 35) are layers that are provided on the two outer sides of the glass (21), feature recesses (37, 39) and made from the same material.

6. Arrangement as claimed in Claim 5, wherein
the recesses (37) are straight grooves extending into the adaptation layers (33).

7. Arrangement as claimed in Claim 5, wherein
the recesses (39) are circular grooves extending into the adaptation layers (35).

8. Arrangement as claimed in Claim 5, wherein
the recesses (37, 39) have a depth (t) which is equal to the thickness of the adaptation layers (33, 35) and which corresponds approximately to the quarter of the wavelength of the first mode of the microwave signals that is capable of propagation in the waveguide (17) at the predefined signal frequency in the adaptation layers (37, 39).

9. Arrangement as claimed in Claim 5, wherein
the adaptation layers (33, 35) each have an effective dielectric constant that depends on the dimensions of the recesses (37, 39), said dielectric constant corresponding to the root of the product of the dielectric constant of the waveguide (17) and the dielectric constant of the glass (21).

10. Arrangement as claimed in Claim 5, wherein
a ratio of a total volume occupied by all the recesses (37, 39) of an adaptation layer (33, 35) to the total volume of the adaptation layer (33, 35) is predefined in such a way that the adaptation layer (33, 35) has an effective dielectric constant that corresponds to the root of the product of the dielectric constant of the waveguide (17) and the dielectric constant of the glass (21).

11. Arrangement as claimed in one of the previous claims, wherein
- the diameter of the circular cross-section is slightly larger than the longer side of the rectangular cross-section, such that the rectangular cross-section fits completely into the circular cross-section
- the transition element (4) has several zones that are adjacent to one another (43, 45, 47, 49),
-- of which a first exterior zone (43) has an axial through-bore whose cross-section is equal to the circular cross-section of the antenna (9a),
-- of which a second exterior zone (49) has an axial through-bore whose cross-section is equal to the rectangular cross-section of the feedthrough,
-- of which at least two are transition zones (45, 47) arranged between the first and the second exterior zone (43, 49),
--- which each feature a recess that penetrates the transition zone (45, 47) in the axial direction,
--- which consists of a bore with the rectangular cross-section and an additional bore, which is executed in a manner that is coaxial with the first bore, said additional bore having a circular cross-section,
- wherein the diameters of the additional bores are less than the diameter of the circular cross-section of the first exterior zone (43) and greater than the shorter side of the rectangular cross-section of the second exterior zone (49), and - starting with the transition zone (45) that is adjacent to the first zone (43) - decrease from transition zone (45) to transition zone (47).

## Revendications

1. Dispositif destiné à la mesure d'un niveau d'un produit (1) dans un réservoir (3) avec
- un transmetteur de niveau (7) fonctionnant avec des micro-ondes, avec
-- une électronique d'appareil de mesure, qui comprend un générateur de micro-ondes pour la génération de signaux micro-ondes,
-- une antenne (9, 9a, 9b) raccordée à l'électronique d'appareil de mesure, qui sert à émettre les signaux micro-ondes dans le réservoir (3) en direction du produit (1),
-- le transmetteur de niveau (7) étant soit conçu de telle sorte que l'antenne (9, 9a, 9b) servant à émettre les signaux micro-ondes sert à recevoir les signaux de réflexion des signaux micro-ondes réfléchis dans le réservoir (3) en direction de cette antenne (9, 9a, 9b), soit conçu de telle sorte à comporter une antenne supplémentaire, qui sert à recevoir les signaux de réflexion des signaux micro-ondes réfléchis sur une surface du produit (1),
-- l'antenne (9, 9a, 9b) qui émet les signaux micro-ondes étant alimentée via un guide d'ondes rectangulaire et présentant une section circulaire, et
- une traversée (11, 25, 27) insérée dans un trajet des signaux micro-ondes, avec
-- un guide d'ondes (17) et
-- une fenêtre (19, 29, 31), transparente aux micro-ondes, insérée de façon étanche aux gaz dans le guide d'ondes (17),
--- qui comporte une vitre (21), dont l'épaisseur correspond à environ une demi-longueur d'onde ou à un petit multiple entier de la demi-longueur d'onde d'un premier mode susceptible de se propager dans le guide d'ondes (17), notamment un mode fondamental, des signaux micro-ondes à une fréquence de signal prédéfinie dans la vitre (21), et
--- qui présente deux couches d'adaptation (23, 33, 35) se trouvant sur les faces extérieures opposées de la vitre (21), couches dont l'épaisseur correspond environ à un quart de la longueur d'onde du premier mode des signaux micro-ondes, susceptible de se propager dans le guide d'ondes (17), à la fréquence de signal prédéfinie dans les couches d'adaptation (23, 33, 35),
pour lequel
- la traversée (11, 25, 27) et la fenêtre (19, 29, 31) présentent une section rectangulaire et, dans une gamme de fréquences comprenant la fréquence de signal prédéfinie, seul le premier mode susceptible de se propager est capable de se propager, et
- est inséré, entre la traversée (11, 27, 27) et l'antenne (9, 9a, 9b), un élément de transition (41), qui transforme la section rectangulaire en la section circulaire.

2. Dispositif selon la revendication 1, pour lequel
- le transmetteur de niveau (7) est un radar pulsé,
- les signaux micro-ondes sont des impulsions de micro-ondes d'une fréquence d'émission prédéfinie, et
- la fréquence de signal prédéfinie est égale à cette fréquence d'émission.

3. Dispositif selon la revendication 1, pour lequel
- le transmetteur de niveau (7) est un radar à ondes entretenues à modulation de fréquence,
- les signaux micro-ondes sont des signaux modulés périodiquement en fréquence
- la fréquence de signal prédéfinie est égale à une fréquence centrale des signaux modulés en fréquence.

4. Dispositif selon la revendication 1, pour lequel
les couches d'adaptation (23, 33, 35) présentent chacune une constante diélectrique, qui correspond à une racine du produit des constantes diélectriques du guide d'ondes (17) et des constantes diélectriques de la vitre (21).

5. Dispositif selon la revendication 1, pour lequel
- la fenêtre (29, 31) est un composant en une pièce, qui est constituée d'un unique matériau, et
- les couches d'adaptation (33, 35) sont des couches prévues sur les deux faces extérieures de la vitre (21), sont munies d'évidements (37, 39) et sont constituées de ce matériau.

6. Dispositif selon la revendication 5, pour lequel
les évidements (37) sont des rainures droites s'étendant dans les couches d'adaptation (33).

7. Dispositif selon la revendication 5, pour lequel
les évidements (39) sont des rainures circulaires s'étendant dans les couches d'adaptation (35).

8. Dispositif selon la revendication 5, pour lequel
les évidements (37, 39) présentent une profondeur (t), qui est égale à l'épaisseur des couches d'adaptation (33, 35) et qui correspond approximativement au quart de la longueur d'onde du premier mode des signaux micro-ondes susceptible de se propager dans le guide d'ondes (17) à la fréquence de signal prédéfinie dans les couches d'adaptation (37, 39).

9. Dispositif selon la revendication 5, pour lequel
les couches d'adaptation (33, 35) présentent chacune une constante diélectrique effective dépendant des dimensions des évidements (37, 39), laquelle constante diélectrique correspond à la racine du produit des constantes diélectriques du guide d'ondes (17) et des constantes diélectriques de la vitre (21).

10. Dispositif selon la revendication 5, pour lequel
un rapport entre un volume total occupé par tous les évidements (37, 39) d'une couche d'adaptation (33, 35) et le volume total de la couche d'adaptation (33, 35) est prédéfini de telle sorte que la couche d'adaptation (33, 35) présente une constante diélectrique effective, qui correspond à la racine du produit des constantes diélectriques du guide d'ondes (17) et des constantes diélectriques de la vitre (21).

11. Dispositif selon l'une des revendications précédentes, pour lequel
- le diamètre de la section circulaire est légèrement supérieur au côté long de la section rectangulaire, si bien que la section rectangulaire s'adapte entièrement dans la section circulaire
- l'élément de transition (4) comporte plusieurs zones adjacentes (43, 45, 47, 49),
-- parmi lesquelles une première zone extérieure (43) présente un alésage traversant, dont la section est égale à la section circulaire de l'antenne (9a),
-- parmi lesquelles une deuxième zone extérieure (49) comporte un alésage traversant axial, dont la section est égale à la section rectangulaire de la traversée,
-- parmi lesquelles au moins deux zones de transition (45, 47) sont disposées entre la première et la deuxième zone extérieure (43, 49),
--- qui présentent chacune un évidement traversant en direction axiale la zone de transition (45, 47),
--- qui se compose d'un alésage présentant la section rectangulaire et un alésage supplémentaire exécuté de manière coaxiale au premier alésage, lequel alésage supplémentaire présente une section circulaire,
- les diamètres des alésages supplémentaires sont inférieurs au diamètre de la section circulaire de la première zone extérieure (43) et supérieurs au côté court de la section rectangulaire de la deuxième zone extérieure (49), et diminuent depuis la zone de transition (45) adjacente à la première zone (43) de la zone de transition (45) vers la zone de transition (47).
